# NEUE EUROPÄISCHE PATENTSCHRIFT

(11) **EP 1 428 743 B2**
(45) Veröffentlichungstag und Bekanntmachung des Hinweises auf die Entscheidung über den Einspruch: **08.06.2016**
(45) Hinweis auf die Patenterteilung: 30.07.2008
(21) Anmeldenummer: 03024264.8
(22) Anmeldetag: 23.10.2003
(51) Int. Cl.: B62D 25/08

(54) **Heckverkleidungsteil mit einer daran befestigten Abgasendrohrblende**
Rear fairing with exhaust end pipe cover fixed thereto
Carenage arrière avec obturateur de tuyau de sortie d'échappement attaché audit carenage

(30) Priorität: 13.12.2002 DE 10258250
(43) Veröffentlichungstag der Anmeldung: 16.06.2004
(73) Patentinhaber: Dr. Ing. h.c. F. Porsche AG, 70435 Stuttgart (DE)
(72) Erfinder: Rinklin, Gerhard, 75233 Tiefenbronn (DE)
(74) Vertreter: Grauel, Andreas

(56) Entgegenhaltungen:
- EP-A- 0 848 144
- DE-A1- 19 914 426
- DE-A1- 19 940 102
- DE-C1- 10 140 435
- DE-C1- 10 140 435
- US-A- 2 841 232
- US-A- 2 841 232
- US-A- 2 850 314
- US-A- 2 979 357
- US-A- 5 282 361
- US-B1- 6 220 387
- PATENT ABSTRACTS OF JAPAN Bd. 2000, Nr. 14, 5. März 2001 (2001-03-05) -& JP 2000 328924 A (SUZUKI MOTOR CORP), 28. November 2000 (2000-11-28)

## Beschreibung

Bei der Erfindung wird ausgegangen von einem Heckverkleidungsteil mit einer daran befestigten Abgasendrohrblende für eine Abgasanlage eines Kraftfahrzeugs, gemäß Oberbegriff des Anspruchs 1.

Ein gattungsbildendes Heckverkleidungsteil ist aus der US - A 28 50 341 bekannt. Es ist als Stoßstange ausgebildet, an der eine sich - in Strömungsrichtung der Abgase gesehen - zunächst in einem Übergangsabschnitt verengende und dann in einem Austrittsabschnitt fächerförmig erweiternde Abgasendrohrblende befestigt ist. Die Auslassöffnung der Abgasendrohrblende liegt in einer Durchtrittsöffnung, die in das Heckverkleidungsteil eingebracht ist. Die Abgasendrohrblende besitzt eine Einlassöffnung, die mit einem Endrohr der Abgasanlage kommuniziert. Der Einlassöffnung stromabwärts nachgeordnet liegt die Auslassöffnung; dazwischen ist der sich im Querschnitt verjüngenden Übergangsabschnitt angeordnet. Um bei der Fahrt des Fahrzeugs einen kühlenden Luftstrom durch die Abgasendrohrblende zu leiten, ist der innere Querschnitt der Einlassöffnung größer als der äußere Querschnitt des Endrohrs der Abgasanlage und der die Einlassöffnung aufweisende Lufteintrittsabschnitt der Endrohrblende übergreift das Endrohr und liegt mit radialem Abstand zum Endrohr. Für die Befestigung der Abgasendrohrblende ist ausschließlich eine Verbindung zum Heckverkleidungsteil vorgesehen. Somit kann ein Wärmeübergang vom Endrohr der Abgasanlage zur Abgasendrohrblende lediglich durch das heiße Abgas erfolgen, da zwischen Endrohr und Blende kein Kontakt besteht und eine wärmeleitende Materialverbindung zwischen Abgasendrohrblende und Endrohr somit vermieden ist.

Aus der DE 100 25 121 A1 ist eine Abgasendrohrblende bekannt, die auf ein Endrohr einer Abgasanlage aufgeschoben wird. Die Abgasendrohrblende ist ausschließlich mit dem Abgasendrohr verbunden, wodurch eine direkte Wärmeleitung vom sich erhitzenden Endrohr zur Blende gegeben ist. Diese Blende eignet sich daher für die Befestigung an Heckverkleidungsteilen nicht, insbesondere dann, wenn diese aus Kunststoff hergestellt und/oder lackiert und/oder mit einem Überzug beschichtet sind.

Es ist daher Aufgabe der Erfindung, ein Heckverkleidungsteil mit einer Abgasendrohrblende anzugeben, bei dem sowohl sicherheitstechnische und optische Aspekte als auch Styling-Ansprüche berücksichtigt sind sowie auch eine übermäßige Erwärmung der Abgasendrohrblende verhindert ist.

Gelöst wird die Aufgabe mit einem Heckverkleidungsteil, welches die in Anspruch 1 genannten Merkmale umfasst. Weitere, die Erfindung ausgestaltende Merkmale sind in dem Unteranspruch angegeben.

Die mit der Erfindung hauptsächlich erzielten Vorteile sind darin zu sehen, dass neben einer ansprechenden Optik durch die Befestigung der Blende und deren Durchtritt am Heckverkleidungsteil außerdem bei einem Fahrzeugunfall mit Verformungen am Heckverkleidungsteil die Abgasanlage mit dem Endrohr in gewissem Maße vor Beschädigung geschützt ist, da die erfindungsgemäße Abgasendrohrblende durch ihren entsprechend ausgelegten Durchlassquerschnitt größtenteils über das Endrohr geschoben werden kann und dabei das Endrohr nicht oder kaum beschädigt, wodurch das Risiko von Undichtigkeiten an der Abgasanlage zumindest vermindert ist. Außerdem ist durch den entsprechenden Durchlassquerschnitt ein Durchleiten von ausreichend Luft bei der Fahrt des Fahrzeugs durch die Blende gegeben, um diese auf niedriger Temperatur zu halten bzw. eine übermäßige Konvektion zu verhindern, so dass der Spalt zwischen Blende und Heckverkleidungsteil optimiert werden kann.

Eine verbesserte Kühlung der Abgasendrohrblende im Fahrbetrieb des Fahrzeugs wird erfindungsgemäß durch ein doppelwandiges Rohr für die Blende erzielt, dessen hohler Mantel von Luft durchströmt werden kann, wodurch die äußere Rohrwand des doppelwandigen Rohrs durch den so erreichten inneren Kühlluftstrom wärmeisoliert von der inneren Rohrwand ist, an der die heißen Abgase entlang strömen.

Ferner sind erfindungsgemäß an der äußeren Rohrwand der Blende Befestigungslaschen angebracht, die über einen Befestigungsrahmen mit dem Heckverkleidungsteil verbunden und streifenförmig ausgebildet sind, so dass eine punktförmige Anbindung der Blende am Heckverkleidungsteil gegeben ist und an das Heckverkleidungsteil wenig Wärme weitergeleitet wird. Beispielsweise können drei Befestigungslaschen verwendet werden.

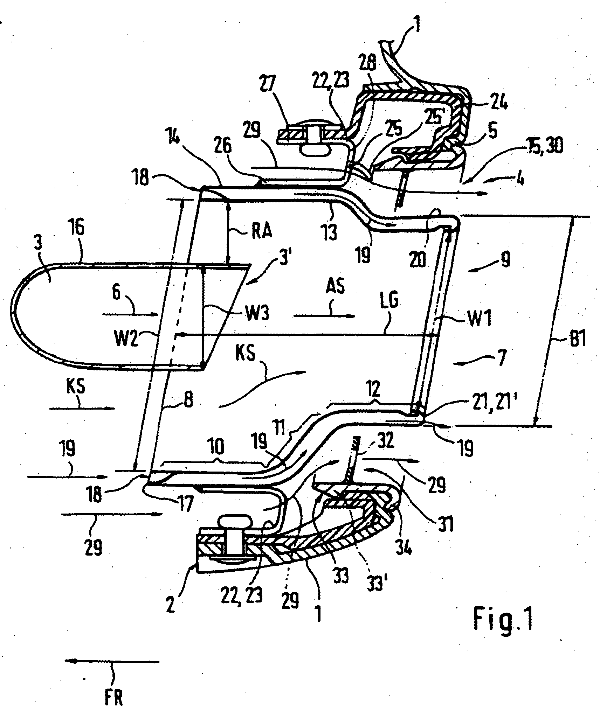

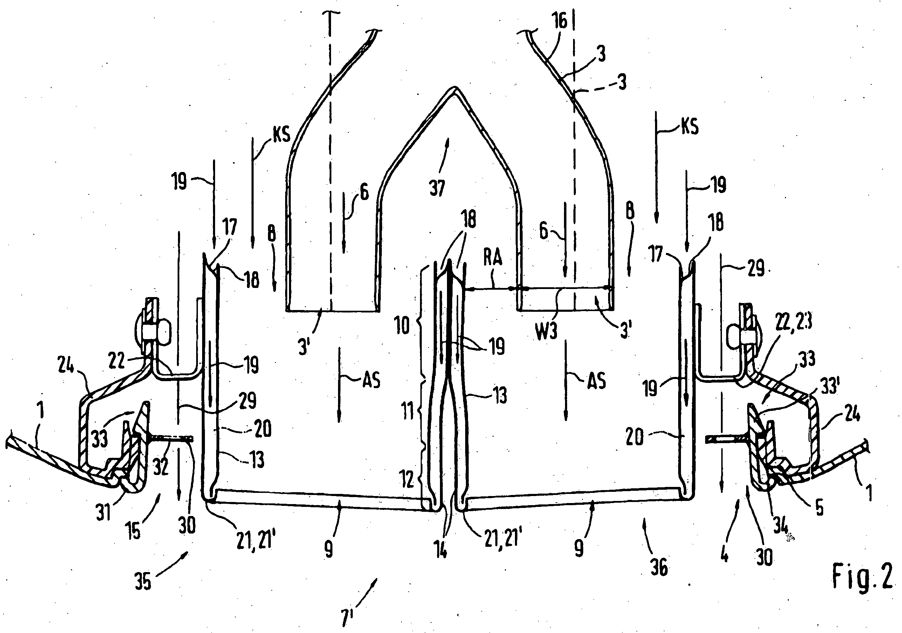

Die Erfindung wird nachfolgend anhand von Ausführungsbeispielen mit Bezug auf die Zeichnung näher erläutert. Die Fig. 1 und 2 zeigen jeweils einen Schnitt durch ein Heckverkleidungsteil, an dem eine Abgasendrohrblende befestigt ist, wobei in Fig. 1 die Schnittebene parallel zu einer gedachten Vertikalen und in Fig. 2 die Schnittebene zu einer gedachten Horizontalen parallel verläuft.

In Fig. 1 ist ausschnittsweise ein Heckverkleidungsteil 1 eines hier nicht näher dargestellten Kraftfahrzeugs mit Verbrennungsmotor dargestellt. Das Heckverkleidungsteil bildet den Heckabschluss der Fahrzeugkarosserie und verdeckt insbesondere einen hier jedoch nicht gezeigten Stoßfängerquerträger. Das obere, hier nicht eingezeichnete Ende des Heckverkleidungsteils 1 schließt an die übrige Karosserieaußenhaut des Kraftfahrzeus an. Das untere, freie Ende 2 des Heckverkleidungsteils 1 liegt beispielsweise benachbart zum Fahrzeugboden bzw. an der Unterseite des Fahrzeugs. Das zweite Ende 2 könnte ggf. auch in eine Unterbodenverkleidung (hier nicht dargestellt) übergehen oder damit verbunden sein.

Bei dem Kraftfahrzeug handelt es sich vorzugsweise um einen Sportwagen, bei dem der Verbrennungsmotor in Heck- oder Mittelmotoranordnung eingesetzt ist. Insbesondere bei diesen Fahrzeugen besteht das Problem, dass die Abgasanlage, von der hier lediglich ein Endrohr 3 gezeigt ist, mit kurzer Rohrführung zwischen Abgaskrümmer und Endrohr 3 auskommen muss, wodurch die am Endrohr 3 austretenden Abgase des Verbrennungsmotors noch eine sehr hohe Temperatur besitzen, insbesondere im Vergleich bei Abgasanlagen, die aufgrund der Anordnung des Verbrennungsmotors im Frontbereich eine entsprechend lange Rohrführung bis in den Heckbereich aufweisen. Jedoch ist der nachfolgend beschriebene Gegenstand nicht auf Sportwagen mit Heck- oder Mittelmotor beschränkt, sondern ist für andere Personenkraftwagen ggf. auch mit Frontmotor in gleicher Weise verwendbar.

Beispielsweise aus Stylinggründen und/oder aerodynamischen Anforderungen heraus besteht der Wunsch, das Endrohr 3 nicht unterhalb des Heckverkleidungsteils 1 vorbei zu führen, sondern möglichst durch das Heckverkleidungsteil 1 hindurch. Dafür ist im Heckverkleidungsteil 1 eine Durchtrittsöffnung 4 vorgesehen, die von einem Mündungsrand 5 vollständig umrandet ist. Damit die in Pfeilrichtung 6 in dem Endrohr 3 strömenden heißen Abgase aus der Durchtrittsöffnung 4 herausgeleitet werden können, ohne dabei das vorzugsweise aus Kunststoff bestehende Heckverkleidungsteil 1 aufgrund von Wärmeeinwirkung zu beschädigen, ist eine dem Endrohr 3 zugeordnete, vom Endrohr thermisch entkoppelte Abgasendrohrblende 7 nach einem ersten Ausführungsbeispiel nach Fig. 1 vorgesehen. Sie ist dabei als Einrohrblende realisiert, wobei Ausführungsformen für mehrere Endrohre 3 vorgesehen sein können, so dass jedem Endrohr 3 eine Endrohrblende 7 zugeordnet sein kann, wobei mehrere Blenden eine zusammenhängende Baueinheit bilden können, worauf weiter unten im Zusammenhang mit Fig. 2 näher eingegangen wird.

Die Blende 7 besitzt eine Einlassöffnung 8 und kommuniziert mit dem Abgasaustritt 3' am Endrohr 3 der Abgasantage. Ferner besitzt die Abgasendrohrblende 7 eine Auslassöffnung 9, die - in stromabwärtiger Richtung (Pfeilrichtung 6) des Abgasstromes AS gesehen - der Einlassöffnung 8 nachgeordnet ist. Die Auslassöffnung 9 liegt insbesondere außerhalb des Heckverkleidungsteils 1 bzw. steht darüber hinaus, so dass die Abgasendrohrblende 7 das Heckverkleidungsteil 1 durchdringt bzw. die Durchtrittsöffnung 4 durchsetzt. Es ist jedoch auch möglich, die Auslassöffnung 9 in der Ebene des Mündungsrandes 5 oder kurz davor enden zu lassen. Die Abgasendrohrblende 7 besitzt mehrere aneinander gereihte Abschnitte 10, 11 und 12, von denen ein Lufteintrittsabschnitt 10 die Einlassöffnung 8 aufweist. In stromabwärtiger Richtung (Pfeil 6) schließt sich an den Lufteintrittsabschnitt 10 ein sich im Querschnitt verjüngender Übergangsabschnitt 11 an, der in einen Austrittsabschnitt 12 übergeht, der die Auslassöffnung 9 aufweist, so dass zwischen Einlassöffnung 8 und Auslassöffnung 9 der Übergangsabschnitt 11 angeordnet ist. Der äußere Blendenquerschnitt B1 im Bereich der Auslassöffnung 9 und damit auch der innere Querschnitt W1 der Auslassöffnung 9 sind kleiner als der Querschnitt der Durchtrittsöffnung 4, so dass zwischen dem Rand 5 und der Abgasendrohrblende 7 ein umlaufender Spalt 15 gebildet ist. Da die Abgasendrohrblende 7 als doppelwandiges Rohr mit innerer Rohrwandung 13 und äußerer Rohrwandung 14 ausgebildet ist, liegt somit zwischen äußerer Rohrwandung 14 und dem Mündungsrand 5 der Spalt 15 vor.

Der innere Querschnitt bzw. die Öffnungsweite W2 der Einlassöffnung 8 ist größer als der äußere Querschnitt W3 des Endrohrs 3. Während der Fahrt des Kraftfahrzeugs kann so ein erster Kühlluftstrom KS in die Blende 7 eingeleitet werden, der sich in der Blende 7 mit dem in Pfeilrichtung 6 strömenden Abgasstrom AS mischen und die Blende 7, insbesondere die innere Rohrwand 13 kühlen kann. Aus Fig. 1 ist ersichtlich, dass der Lufteintrittsabschnitt 10 mit seiner Einlassöffnung 8 das Endrohr 3 etwas übergreift, so dass der Abgasstrom AS sicher in die Blende 7 eingeleitet wird, und - durch die größere innere Öffnungsweite W2 - mit radialem Abstand RA zur Umfangswand 16 des Endrohrs 3 liegt. Die innere Rohrwand 13 weist im Ausführungsbeispiel im Bereich des Lufteintrittsabschnitts 10 diesen radialen Abstand RA zur Umfangswand 16 auf. Der Durchlassquerschnitt, also der innere Querschnitt des Lufteintrittsabschnitts 10 und des Übergangsabschnitts 11 sowie des Austrittsabschnitts 12 der Abgasendrohrblende 7 über die gesamte Länge LG der Abgasendrohrblende 7 ist größer als der äußere Querschnitt W3 des Endrohrs 3. Mithin kann die Abgasendrohrblende 7 nahezu vollständig über das Endrohr 3 geschoben werden, wenn bei einem Heckaufprall das Heckverkleidungsteil 1 mit der daran befestigten Abgasendrohrblende 7 in Fahrtrichtung FR verformt bzw. verschoben wird. Die Abgasendrohrblende 7 wirkt dabei nicht oder nur gering auf das Endrohr 3 ein, so dass eine relevante Beschädigung des Endrohrs 3 und damit ggf. auch andere Teile der Abgasanlage zumindest vermindert ist, wodurch die Abgasführung innerhalb der Abgasanlage nicht oder kaum beeinträchtigt wird. Neben der thermischen Entkopplung zwischen Endrohr 3 und Blende 7 ist überdies eine mechanische Entkopplung durch den weiteren Durchlassquerschnitt der Blende 7 gegeben.

Um den Wärmeübergang von der insbesondere aus Metall hergestellten Abgasendrohrblende 7 auf das Heckverkleidungsteil 1 weiter reduzieren, ist vorgesehen, das doppelwandige Rohr mit seiner inneren Rohrwandung 13 und äußeren Rohrwandung 14 von Luft durchströmbar auszubilden. Insbesondere sind hierfür an der vorderen Stirnseite 17 der Abgasendrohrblende 7 Lufteinlässe 18 vorgesehen, die eine zweite bzw. innere Kühlluftströmung 19 in den hohlen Mantel 20 des Rohrs hinein ermöglichen.

An der hinteren Stirnseite 21 bzw. in den Mantel 20 können Kühlluftauslässe 21' eingebracht sein, so dass dort die Luftströmung 19 wieder austreten kann. Diese Luftströmung 19 bewirkt eine Wärmeisolierung der inneren Rohrwand 13 gegenüber der äußeren Rohrwand 14 sowie einen Abtransport der Wärme.

Die Abgasendrohrblende 7 ist an dem Heckverkleidungsteil 1 durch Befestigungsmittel 22 festgelegt. Das Befestigungsmittel umfasst mehrere streifenförmige Befestigungslaschen 23, die mit einem Ende an der äußeren Rohrwandung 14 und mit dem anderen Ende an dem Heckverkleidungsteil 1, unter Zwischenschaltung eines wärmebeständigen Befestigungsrahmens 24, befestigt sind. Die Laschen 23 können um den Umfang der Blende 7 verteilt angeordnet sein und führen zu einem geringen Wärmeübergang von der Blende 7 zum Heckverkleidungsteil 1. Der Befestigungsrahmen 24, vorzugsweise aus Kunststoff und ggf. mit Faserverstärkung hergestellt, bewirkt eine weitere thermische Entkopplung der Abgasendrohrblende 7 von dem Heckverkleidungsteil 1. Für eine geringe Wärmeleitung bzw. eine Erhöhung des Wärmeleitwiderstandes von der Blende 7 zum Heckverkleidungsteil 1 weisen die Befestigungslaschen 23 eine Querschnittsschwächung, beispielsweise in Form eines Durchbruchs 25 oder einer Einschnürung auf. Der Durchbruch 25 kann durch Stanzen und Herausbiegen des Materials der Lasche 23 geformt werden, wobei das herausgebogene Material eine Luftleitlasche 25' bilden kann. Im gezeigten Ausführungsbeispiel sind die Befestigungslaschen 23 U-förmig gebogen und ein Schenkel 26 ist an der Abgasendrohrblende 7 und der andere Schenkel 27 ist an dem Heckverkleidungsteil 1 über den Befestigungsrahmen 24 befestigt. Die Befestigungslaschen können auch L-förmig gebogen und entsprechend mit dem Befestigungsrahmen 24 verbunden sein. Die Querschnittsschwächung, also der Durchbruch 25 oder die Einschnürung kann an der die beiden Schenkel 26 und 27 verbindenden Basis 28 ausgebildet sein. Da das Befestigungsmittel 22 nicht als umlaufender Ring ausgebildet ist, sondern die streifenförmigen Laschen 23 umfasst, wird eine dritte Kühlluftströmung 29 entlang der äußeren Rohrwandung 14 ermöglicht, die am Heckverkleidungsteil 1 im Spalt 15 wieder ausritt, welcher Spalt 15 somit eine Luftaustrittsöffnung 30 zwischen Blende 7 und Mündungsrand 5 bildet. Die Laschen 23 können die dritte Kühlluftströmung 29 in Richtung des Spaltes 15 ablenken. Insbesondere mit den aus den Durchbrüchen 25 herausgebogenen Luftleitlaschen 25' ist dies möglich. Für eine Verkleidung des Spaltes 15 ist in die Luftaustrittsöffnung 30 eine ringförmige Abdeckung 31 eingesetzt, die sich etwa quer zur dritten Kühlluftströmung 29 erstreckt und mit ihrem freien Ende mit Abstand zum Mantel 20 liegen kann. Somit kann die Kühlluftströmung 29 um die Abdeckung 31 herum strömen. In der Abdeckung 31 können alternativ oder zusätzlich eine oder mehrere Durchbrechungen 32 eingebracht sein, durch die die dritte Luftströmung 29 hindurch treten kann. Die Abdeckung 31 ist beispielsweise als Lochblech ausgeführt. Befestigt wird die Abdeckung 31 am Heckverkleidungsteil 1 oder am Befestigungsrahmen 24 oder an der Blende 7 oder an einer Abschirmblende 34. Für diese Befestigung ist die Abdeckung 31 mit einer eine Rastnase 33' aufweisenden Rastverbindung 33 ausgestattet, die an der Abdeckung 31 beispielsweise an der Abschirmblende 34 angebracht ist und die das Heckverkleidungsteil 1 bzw. den Befestigungsrahmen 24 hintergreift. Die Abschirmblende 34 ist an ihrem an dem Mündungsrand 5 liegenden Ende nach außen abkragend ausgebildet, so dass sie den Mündungsrand 5 umgreift und mit der Rastung 33 zusammen die Befestigung der Abdeckung 31 und des Befestigungsrahmens 24 an dem Heckverkleidungsteil 1 bildet. Die Abschirmblende 34 und die Abdeckung 31 sind aus thermischer Sicht vorzugsweise aus Metall, beispielsweise Aluminium, hergestellt und ggf. miteinander verbunden oder einstückig gefertigt; sie können auch aus Kunststoff ggf. mit Faserverstärkung bestehen. Beide Teile können lackiert sein. Die Abdeckung 31 kann auch als von der Abschirmblende 34 abgestellter Steg ausgebildet sein.

Aus Fig. 2 ist ersichtlich, dass eine Abgasendrohrblende 7' in einem zweiten Ausführungsbeispiel als Doppelendrohrblende mit zwei Rohrabschnitten 35 und 36 ausgeführt ist, von denen jedes als eine Blende 7 gemäß Fig. 1 angenommen ist und in der gezeigten Ausführungsform zusammenhängend eine Baueinheit bilden. Die beiden Rohrabschnitte 35 und 36 liegen benachbart - wie gezeigt - nebeneinander oder übereinander und sind vorzugsweise aneinander befestigt. Hierfür können die äußeren Rohrwandungen 14 der Rohrabschnitte 35 und 36 zumindest abschnittsweise miteinander verbunden sein. Die Abgasendrohrblende 7' ist am Heckverkleidungsteil 1 befestigt und beispielsweise jeder Rohrabschnitt 35 und 36 weist das Befestigungsmittel 22 auf. Es können im Heckverkleidungsteil 1 eine oder mehrere Durchtrittsöffnungen 4 für die Blende 7' herausgearbeitet sein. Im übrigen sind in Fig. 2 gleiche bzw. gleichwirkende Teile wie in Fig. 1 mit denselben Bezugszeichen versehen. Insofern wird auf deren Beschreibung verwiesen.

Ist eine Doppelendrohrblende - wie in Fig. 2 gezeigt - vorgesehen, kann das Endrohr 3 der Abgasanlage beispielsweise mit einer Y-förmigen bzw. gabelartigen Erweiterung 37 ausgestattet sein, so dass in jedem Rohrabschnitt 35 bzw. 36 der Blende 7' ein Endrohr 3 endet. Anstelle der gabelartigen Erweiterung 37 können auch zwei separate Endrohre 3 in die jeweiligen Rohrabschnitte 35 bzw. 36 hineinragen. Eine mittig bzw. zentrale Anordnung eines einzelnen Endrohres 3 ist ebenso möglich und in Fig. 2 gestrichelt eingezeichnet.

## Patentansprüche

1. Heckverkleidungsteil mit einer daran befestigten Abgasendrohrblende für eine Abgasanlage eines Kraftfahrzeugs, mit einer umrandeten Durchtrittsöffnung für die Abgasendrohrblende, wobei die Abgasendrohrblende (7, 7') von einem Endrohr (3) der Abgasanlage thermisch entkoppelt sowie durch den gewählten Durchlassquerschnitt von dem Endrohr (3) mechanisch entkoppelt ist, indem die Abgasendrohrblende nahezu vollständig über das Endrohr schiebbar ist und umfasst:
- eine Einlassöffnung (8), die mit einem Endrohr (3) der Abgasanlage kommuniziert und,
- eine zur Einlassöffnung (8) stromabwärts liegende Auslassöffnung (9),
- einen sich zwischen Einlassöffnung (8) und Auslassöffnung (9) liegenden, sich im Querschnitt verjüngenden Übergangsabschnitt (11),
- einen inneren Querschnitt (W2) der Einlassöffnung (8), der größer als der äußere Querschnitt (W3) des Endrohrs (3) ist,
- einen die Einlassöffnung (8) aufweisenden Lufteintrittsabschnitt (10), der das Endrohr (3) übergreift und mit radialem Abstand (RA) zum Endrohr (3) liegt,
- und der Durchlassquerschnitt über die gesamte Länge (LG) der Abgasendrohrblende (7, 7') größer als der äußere Querschnitt (W3) des Endrohrs (3) der Abgasanlage ist,
**dadurch gekennzeichnet, dass**
die Abgasendrohrblende (7, 7') als doppelwandiges Rohr ausgebildet ist, dessen Mantel (20) von Luft durchströmbar ist, und dass die Abgasendrohrblende (7, 7') über mehrere streifenförmige, von der äußeren Rohrwand (14) des doppelwandigen Rohrs ausgehende Befestigungslaschen (23) am Heckverkleidungsteil (1) über einen Befestigungsrahmen (24) befestigt ist, und wobei die Befestigungslaschen (23) eine Querschnittsschwächung (25) aufweisen, die einen erhöhten Widerstand für Wärmeleitung darstellt.

2. Heckverkleidungsteil nach Anspruch 1, **dadurch gekennzeichnet, dass** die Befestigungslaschen (23) U-förmig oder L - förmig ausgeführt sind und dass ein Schenkel (26) an der Abgasendrohrblende(1) und der andere Schenkel (27) am Befestigungsrahmen (24) angebunden ist.

## Claims

1. A rear-end lining part having an exhaust tailpipe trim fastened thereto for an exhaust system of a motor vehicle, having a bordered passage opening for said exhaust tailpipe trim, wherein said exhaust tailpipe trim (7, 7') is thermally decoupled from a tailpipe (3) of the exhaust system and is mechanically decoupled from said tailpipe (3) through the selected flow area by the exhaust tailpipe trim being able to be nearly completely pushed over the tailpipe, and comprises:
- an inlet opening (8) which communicates with a tailpipe (3) of the exhaust system, and
- an outlet opening (9) disposed downstream of the inlet opening (8),
- a transition section (11) disposed between said inlet opening (8) and said outlet opening (9) which tapers in cross section,
- an inner cross section (W2) of said inlet opening (8) which is greater than the outer cross section (W3) of said tailpipe (3),
- an air inlet section (10) having said inlet opening (8) which engages over said tailpipe (3) and is disposed at a radial spacing (RA) from the tailpipe (3),
- and wherein the flow area is greater than the outer cross section (W3) of said tailpipe (3) of the exhaust system over the entire length (LG) of said exhaust tailpipe trim (7, 7'),
**characterised in that**
the exhaust tailpipe trim (7, 7') is embodied as a double-walled pipe, the casing (20) of which is adapted to be traversed by air, and **in that** the exhaust tailpipe trim (7, 7') is fastened to the rear-end lining part (1) via a fastening frame (24) by means of a plurality of strip-shaped fastening lugs (23) extending from the outer pipe wall (14) of said double-walled pipe, and wherein the fastening lugs (23) have a weakened cross-sectional portion (25) which provides increased resistance to thermal conduction.

2. The rear-end lining part as claimed in claim 1, **characterised in that** the fastening lugs (23) are of U-shaped or L-shaped design, and **in that** one leg (26) is connected to said exhaust tailpipe trim (1) and the other leg (27) is connected to said fastening frame (24).

## Revendications

1. Carénage arrière comprenant un obturateur de tuyau de sortie d'échappement pour une installation de gaz d'échappement d'un véhicule automobile, ledit obturateur étant fixé sur ledit carénage arrière comprenant une ouverture de passage, comportant une bordure, pour l'obturateur du tuyau de sortie d'échappement, où l'obturateur (7, 7') du tuyau de sortie d'échappement est découplé thermiquement d'un tuyau de sortie (3) de l'installation de gaz d'échappement et, également, découplé mécaniquement du tuyau de sortie (3) par la section de passage sélectionnée, tandis que l'on peut faire coulisser presque complètement l'obturateur du tuyau de sortie d'échappement par-dessus le tuyau de sortie, ledit obturateur du tuyau de sortie d'échappement comprenant :
- une ouverture d'entrée (8) qui communique avec un tuyau de sortie (3) de l'installation de gaz d'échappement, et
- une ouverture de sortie (9) située en aval de l'ouverture d'entrée (8),
- un tronçon de transition (11) se situant entre l'ouverture d'entrée (8) et l'ouverture de sortie (9), et diminuant en section,
- une section intérieure (W2) de l'ouverture d'entée (8), qui est plus grande que la section extérieure (W3) du tuyau de sortie (3),
- un tronçon d'entrée d'air (10) qui présente une ouverture d'entrée (8), chevauche le tuyau de sortie (3) et se situe à distance radiale (RA) du tuyau de sortie (3),
- et, sur toute la longueur (LG) de l'obturateur (7, 7') du tuyau de sortie d'échappement, la section de passage est supérieure à la section extérieure (W3) du tuyau de sortie (3) de l'installation de gaz d'échappement,
**caractérisé en ce que**
l'obturateur (7, 7') du tuyau de sortie d'échappement est configuré comme un tuyau à double paroi dont l'enveloppe (20) peut être traversée par de l'air, et **en ce que** l'obturateur (7, 7') du tuyau de sortie d'échappement est fixé sur le carénage arrière (1) par un cadre de fixation (24), la fixation étant réalisée par plusieurs pattes de fixation (23), en forme de bande, faisant saillie par rapport à la paroi tubulaire extérieure (14) du tuyau à double paroi, et où les pattes de fixation (23) présentent une diminution de section (25) qui représente une résistance accrue pour la conduction thermique.

2. Carénage arrière selon la revendication 1, **caractérisé en ce que** les pattes de fixation (23) sont réalisées en forme de U ou de L, et **en ce qu'**une branche (26) est reliée à l'obturateur de tuyau de sortie d'échappement (1), l'autre branche (27) étant reliée au cadre de fixation (24).
